# EUROPÄISCHE PATENTSCHRIFT

(11) **EP 3 556 071 B1**
(45) Veröffentlichungstag und Bekanntmachung des Hinweises auf die Patenterteilung: **09.08.2023**
(21) Anmeldenummer: 17801633.3
(22) Anmeldetag: 08.11.2017
(51) Int. Cl.: H04W 12/02, H04W 12/06, H04W 12/10, H04L 12/40, H04W 12/069, H04W 12/106, H04L 9/40

(54) **VERFAHREN, VORRICHTUNG UND COMPUTERLESBARES SPEICHERMEDIUM MIT INSTRUKTIONEN ZUM SIGNIEREN VON MESSWERTEN EINES SENSORS**
METHOD, DEVICE, AND COMPUTER-READABLE STORAGE MEDIUM COMPRISING INSTRUCTIONS FOR SIGNING MEASUREMENT VALUES OF A SENSOR
PROCÉDÉ, DISPOSITIF ET MOYEN DE STOCKAGE LISIBLE PAR ORDINATEUR COMPRENANT DES INSTRUCTIONS POUR LA SIGNATURE DE VALEURS DE MESURE D'UN CAPTEUR

(30) Priorität: 19.12.2016 DE 102016225436
(43) Veröffentlichungstag der Anmeldung: 23.10.2019
(73) Patentinhaber: Volkswagen Aktiengesellschaft, 38440 Wolfsburg (DE)
(72) Erfinder: MAX, Stephan, 38518 Gifhorn (DE); BAUMANN, Peter, 38116 Braunschweig (DE)
(86) Internationale Anmeldenummer: PCT/EP2017/078578
(87) Internationale Veröffentlichungsnummer: WO 2018/114119

(56) Entgegenhaltungen:
- WO-A1-2016/128713
- US-A1- 2015 046 998
- US-A1- 2016 072 781
- US-A1- 2016 365 985
- RODRIGO ROMAN ET AL: "Applicability of Public Key Infrastructures in Wireless Sensor Networks", 28 June 2007 (2007-06-28), PUBLIC KEY INFRASTRUCTURE; [LECTURE NOTES IN COMPUTER SCIENCE], SPRINGER BERLIN HEIDELBERG, BERLIN, HEIDELBERG, PAGE(S) 313 - 320, XP019096038, ISBN: 978-3-540-73407-9

## Beschreibung

Die vorliegende Erfindung betrifft ein Verfahren und ein computerlesbares Speichermedium mit Instruktionen zur Verarbeitung von Messwerten eines Sensors. Die Erfindung betrifft insbesondere ein Verfahren und ein computerlesbares Speichermedium mit Instruktionen zur Verarbeitung von Messwerten eines Sensors, die eine Manipulation der Messwerte durch Dritte erschweren. Die Erfindung betrifft weiterhin einen Sensor, in dem ein solches Verfahren realisiert ist, sowie ein Kraftfahrzeug, in dem ein solches Verfahren oder ein solcher Sensor eingesetzt wird.

In aktuellen Kraftfahrzeugen werden bedingt durch die Digitalisierung immer mehr Daten gesammelt. Aufgrund der zunehmenden Vernetzung der Fahrzeugwelt und des Risikos unerwünschter öffentlichkeitswirksamer Hackerangriffe auf Fahrzeuge ist eine sichere Übertragung der Daten wünschenswert. Zudem sind auch durch den Gesetzgeber Aktivitäten im Bereich der Datensicherheit im Fahrzeug zu erwarten. Um die Daten sicher durch das Fahrzeug zu übertragen und den Nutzen der Daten nicht einzuschränken ist es wichtig, dass die Daten nicht unberechtigt von Dritten beeinflusst werden können. Hierzu werden im Fahrzeug sämtliche Kommunikationsstrecken vom jeweiligen Knotenpunkt zum nächsten Knotenpunkt abgesichert.

Vor diesem Hintergrund beschreibt die Druckschrift DE 10 2014 001 270 A1 ein System zur geschützten Datenübertragung in einem Kraftfahrzeug. Zur Übertragung von Nutzdaten wird zunächst ein erstes Codewort unter Verwendung eines sendeseitigen Zeitwerts berechnet. Anschließend werden die Nutzdaten zusammen mit dem ersten Codewort an einen Empfänger übertragen. Das Verfahren setzt sich fort mit der Berechnung eines zweiten Codewortes unter Verwendung eines empfangsseitigen Zeitwerts. Wenn das erste Codewort und das berechnete zweite Codewort nicht übereinstimmen, werden die Nutzdaten beim Empfänger gekennzeichnet.

Problematisch ist es jedoch, wenn Daten von einem Sensor an ein Backend außerhalb des Fahrzeugs gesendet werden müssen, beispielsweise für eine weitergehende Auswertung zur Erfassung von Verkehrsdaten oder Wetterdaten. In diesem Fall werden diverse Kommunikationsknoten durchlaufen, welche jeweils abgesichert werden müssen. Dies führt zu hohen Kosten.

Die Druckschrift US 2016/0072781 A1 beschreibt ein Gateway, das eine differenzierte sichere Kommunikation zwischen heterogenen elektronischen Geräten unterstützt. Ein Kommunikationsport kommuniziert über Kommunikationsnetzwerke unterschiedlichen Typs mit zwei oder mehreren zugehörigen Geräten mit unterschiedlichen Fähigkeiten für eine sichere Kommunikation. Die Gateway-Logik authentifiziert selektiv die zugeordneten Geräte für eine Gruppenmitgliedschaft in einer Secure Communication Group (SCG) und kommuniziert selektiv Secure Communication Group Keys (SCGKs) an die Geräte, um selektiv Sitzungsschlüssel lokal durch die zugeordneten Geräte für eine gegenseitige sichere Kommunikation gemäß der Gruppenmitgliedschaft der zugeordneten Geräte in der SCG zu erzeugen.

Die Druckschrift US 2016/0365985 A1 beschreibt ein Verfahren zum Erneuern und zum Widerrufen von Zertifikaten. Ein Zertifikat enthält ein Feld mit Erneuerungsinformationen. Wenn ein Server feststellt, dass ein Zertifikat in Kürze abläuft, fordert er einen symmetrischen Schlüssel von einer Zertifizierungsstelle an, um die Erneuerungsinformationen zu entschlüsseln. Die Zertifizierungsstelle stellt daraufhin einen symmetrischen Schlüssel bereit. Der Server verwendet den symmetrischen Schlüssel, um die Erneuerungsinformationen zu entschlüsseln. Diese enthalten aktualisierte Feldwerte für das Zertifikat.

Der Artikel R. Roman et al.: "Applicability of Public Key Infrastructures in Wireless Sensor Networks" fasst den Stand der Technik der Public-Key-Kryptographie für Sensornetzwerke zusammen und untersucht, ob eine funktionierende Public-Key-Infrastruktur in einer Sensornetzwerkumgebung sowohl machbar als auch sinnvoll ist.

Es ist eine Aufgabe der Erfindung, Lösungen für eine Verarbeitung von Messwerten eines Sensors aufzuzeigen, die kostengünstig eine Manipulation der Messwerte durch Dritte erschweren.

Diese Aufgabe wird durch ein Verfahren mit den Merkmalen des Anspruchs 1, durch ein computerlesbares Speichermedium mit Instruktionen gemäß Anspruch 9 und durch einen Sensor gemäß Anspruch 10 gelöst. Bevorzugte Ausgestaltungen der Erfindung sind Gegenstand der abhängigen Ansprüche.

Gemäß einem ersten Aspekt der Erfindung umfasst ein Verfahren zur Verarbeitung von Messwerten eines Sensors eines Kraftfahrzeugs die Schritte:
- Erfassen eines Messwertes durch den Sensor;
- Signieren des erfassten Messwertes mit Hilfe eines dem Sensor zugewiesenen Zertifikates, das geschützt in einem internen Speicher des Sensors abgelegt ist;
- Weitergabe des signierten Messwertes aus dem Sensor an ein Netzwerk; und
- Austauschen des im internen Speicher abgelegten, dem Sensor zugewiesenen Zertifikats mittels eines Softwareupdates.

Gemäß einem weiteren Aspekt der Erfindung enthält ein computerlesbares Speichermedium Instruktionen, die bei Ausführung durch einen Computer den Computer zur Ausführung der folgenden Schritte zur Verarbeitung von Messwerten eines Sensors eines Kraftfahrzeugs veranlassen:
- Erfassen eines Messwertes durch den Sensor;
- Signieren des erfassten Messwertes mit Hilfe eines dem Sensor zugewiesenen Zertifikates, das geschützt in einem internen Speicher des Sensors abgelegt ist;
- Weitergabe des signierten Messwertes aus dem Sensor an ein Netzwerk; und
- Austauschen des im internen Speicher abgelegten, dem Sensor zugewiesenen Zertifikats mittels eines Softwareupdates.

Gemäß einem weiteren Aspekt der Erfindung weist ein Sensor zur Verwendung in einem Kraftfahrzeug zum Erfassen eines Messwertes auf:
- einen internen Speicher, in dem zumindest ein dem Sensor für eine Signierung des Messwertes zugewiesenes Zertifikat geschützt abgelegt ist; und
- eine Signatureinheit zum Signieren eines erfassten Messwertes mit Hilfe des dem Sensor zugewiesenen Zertifikates;
wobei der Sensor eingerichtet ist, das im internen Speicher abgelegte, dem Sensor zugewiesene Zertifikat mittels eines Softwareupdates auszutauschen.

Erfindungsgemäß erfolgt eine Signierung der Messwerte direkt im Sensor. Diese Signierung wird über die komplette Kommunikationskette beibehalten. Der Sensor erhält dafür mindestens ein Zertifikat. Dieses Zertifikat wird benutzt, um die Messungen, die durch die Sensorik durchgeführt werden, vor dem Versand zu signieren. Der signierte Messwert wird an den Empfänger übermittelt, die Echtheit des Messwertes wird dann erst durch den Empfänger anhand des Zertifikates überprüft. Vorzugsweise ist das Zertifikat für alle Sensoren eines Typs identisch. Auf diese Weise wird sichergestellt, dass der Empfänger anhand der Zertifikatsprüfung keine Rückschlüsse auf einen konkreten Sensor ziehen kann. Somit sind durch die Übermittlung der Messwerte an den Empfänger keine Persönlichkeitsrechte betroffen. Alternativ ist das Zertifikat ein individuelles Zertifikat, d.h. jedem Sensor eines Typs ist ein eindeutiges, einmaliges Zertifikat zugeordnet. Auf diese Weise kann eindeutig festgestellt werden, von welchem Sensor Daten zu einem erfassten Ereignis kommen. Auf diese Weise kann sichergestellt werden, dass nach der unberechtigten Entschlüsselung eines Zertifikates durch Dritte nicht sämtliche Sensoren eines Typs unsicher sind. Um auch in diesem Fall die Persönlichkeitsrechte zu wahren, werden die signierten Messwerte vorzugsweise zunächst an eine Zwischenstation übermittelt, die die Echtheit des Messwertes anhand des Zertifikates überprüft und den Messwert dann mit einem der Zwischenstation zugeordneten Zertifikat signiert. Der auf diesem Wege anonymisierte Messwert wird schließlich an den Empfänger übermittelt. Der Empfänger kann somit wiederum keine Rückschlüsse auf einen konkreten Sensor ziehen.

Das Zertifikat ist in einem Speicher des Sensors abgelegt. Das benötigte Zertifikat für den Sensor kann beispielsweise im Rahmen der Produktion des Sensors eingebracht und im Speicher geschützt abgelegt werden. Durch das Ablegen des Zertifikates in einem internen Speicher des Sensors werden somit externe Zugriffe auf das Zertifikat erheblich erschwert, da die Kommunikation zwischen Sensor und Speicher vollständig innerhalb des Sensors erfolgt. Vorzugsweise handelt es sich bei dem Speicher um einen manipulationssicheren Speicher. Manipulationssicherheit kann erzielt werden, indem der Speicher ausschließlich vom Sensor verwendet werden kann, dem er zugeordnet ist, und anderweitig kein Zugriff (lesend sowie schreibend) auf den Speicher möglich ist, ohne den Sensor zu zerstören. Ein Auslesen der dort gespeicherten Daten oder eine gezielte Modifizierung ist von außen auch durch eine direkte Kontaktierung des Sensors nicht möglich. In diese Kategorie fallen beispielsweise Flash-Speicher und Direktzugriffsspeicher (RAM: Random-Access Memory), falls diese sich direkt im Sensor befinden und von außerhalb des Sensors auch durch direkte Kontaktierung kein Zugriff auf diese möglich ist. Manipulationssicherheit kann zudem erreicht werden, indem ein Festwertspeicher (ROM: Read-Only Memory) genutzt wird.

Das dem Sensor zugewiesene Zertifikat kann ausgetauscht werden. Erfindungsgemäß besteht die Möglichkeit, über ein Softwareupdate die Zertifikate in gewissen Zeitintervallen auszutauschen. Hierdurch kann sichergestellt werden, dass die Zertifikate, selbst wenn sie von Dritten entschlüsselt wurden, nur für eine kurze Laufzeit nutzbar sind.

Gemäß einem Aspekt der Erfindung ist das Zertifikat ein aus einer dem Sensor zugewiesenen Gruppe von Zertifikaten ausgewähltes Zertifikat. Für die Signierung kann neben einem Einzelzertifikat auch eine Gruppe von Zertifikaten verwendet werden. In diesem Fall sind vorzugsweise alle Zertifikate der Gruppe in einem Speicher des Sensors abgelegt. Die Anzahl der Zertifikate innerhalb der Gruppe ist dabei so gering gehalten werden, dass keine Rückschlüsse auf konkrete Sensoren durchgeführt werden können. Die Sensoren suchen sich vorzugsweise zufällig ein entsprechendes Zertifikat aus und behalten dieses für die komplette Laufzeit des Sensors bei. Auf der Empfängerseite kann nun festgestellt werden, dass Daten zu einem erfassten Ereignis von unterschiedlichen Sensoren kommen. Voraussetzung dafür ist lediglich, dass die Sensoren unterschiedliche Zertifikate verwenden. Auf diese Weise können Einflüsse von fehlerhaften Sensoren oder Verfälschungen von Dritten entsprechend besser entdeckt werden.

Vorzugsweise werden ein erfindungsgemäßes Verfahren, eine erfindungsgemäße Vorrichtung oder ein erfindungsgemäßer Sensor in einem autonom oder manuell gesteuerten Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zur Verarbeitung von Messwerten eines Sensors;
- Fig. 2: zeigt eine erste Ausführungsform einer Vorrichtung zur Verarbeitung eines Messwertes;
- Fig. 3: zeigt eine zweite Ausführungsform einer Vorrichtung zur Verarbeitung eines Messwertes;
- Fig. 4: zeigt schematisch einen Sensor zum Erfassen eines Messwertes, in dem eine erfindungsgemäße Lösung realisiert ist; und
- Fig. 5: stellt schematisch ein Kraftfahrzeug dar, in dem eine erfindungsgemäße Lösung realisiert ist.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

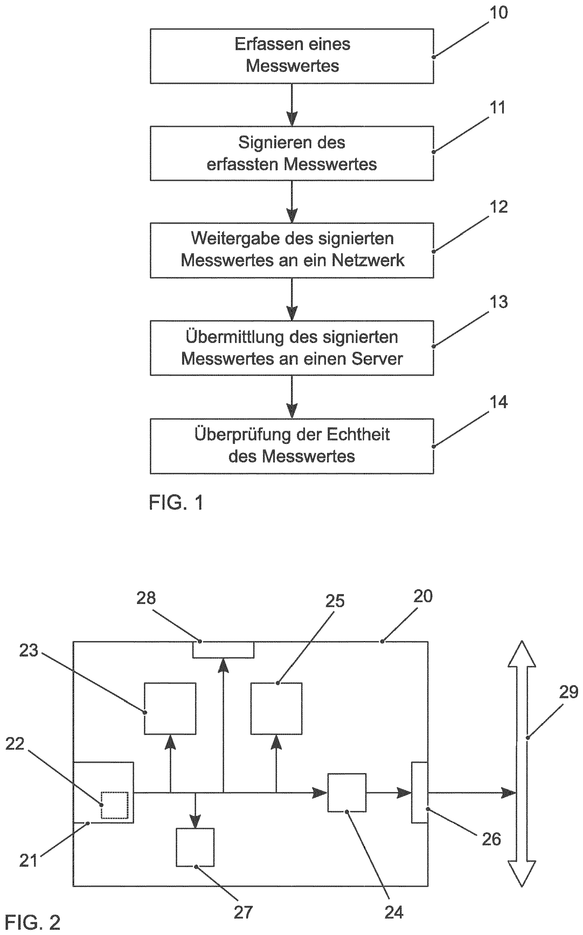

Fig. 1 zeigt schematisch ein Verfahren zur Verarbeitung von Messwerten eines Sensors. In einem ersten Schritt wird ein Messwert durch den Sensor erfasst 10. Anschließend wird der erfasste Messwert mit Hilfe eines dem Sensor zugewiesenen Zertifikates signiert. Der signierte Messwert wird schließlich an ein Netzwerk weitergegeben 12. Über das Netzwerk kann der signierte Messwert an einen Server übermittelt werden 13. Durch den Server erfolgt dann anhand des Zertifikates eine Überprüfung 14 der Echtheit des Messwertes.

Fig. 2 zeigt eine vereinfachte schematische Darstellung einer ersten Ausführungsform einer Vorrichtung 20 zur Verarbeitung eines Messwertes. Die Vorrichtung 20 hat einen Sensor 21 zum Erfassen eines Messwertes. Eine Signatureinheit 23 signiert den erfassten Messwert mit Hilfe eines dem Sensor 21 zugewiesenen Zertifikates. Eine Kommunikationseinheit 24 gibt den signierten Messwert über einen Ausgang 26 der Vorrichtung 20 an ein Netzwerk 29 weiter. Die Signatureinheit 23 und die Kommunikationseinheit 24 können von einer Steuerungseinheit 25 gesteuert werden. Das für die Signierung verwendete Zertifikat kann in einem Speicher 27 der Vorrichtung abgelegt sein. Optional kann das Zertifikat auch in einem Speicher 22 innerhalb des Sensors abgelegt sein. Zudem können auch die Signatureinheit 23, die Kommunikationseinheit 24 oder die Steuerungseinheit 25 integraler Bestandteil des Sensors 21 sein. Über eine Benutzerschnittstelle 28 können gegebenenfalls Einstellungen der Signatureinheit 23, der Kommunikationseinheit 24 oder der Steuerungseinheit 25 geändert werden. Die in der Vorrichtung 20 anfallenden Daten können zudem im Speicher 27 der Vorrichtung 20 abgelegt werden, beispielsweise für eine spätere Auswertung. Die Signatureinheit 23, die Kommunikationseinheit 24 sowie die Steuerungseinheit 25 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft.

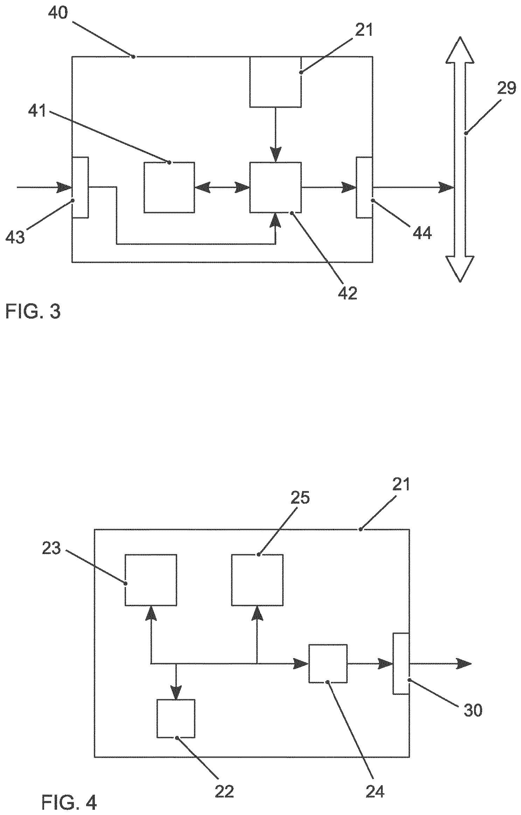

Fig. 3 zeigt eine vereinfachte schematische Darstellung einer zweiten Ausführungsform einer Vorrichtung 40 zur Verarbeitung eines Messwertes. Die Vorrichtung 40 weist einen Sensor 21 zum Erfassen eines Messwertes, einen Prozessor 42 und einen Speicher 41 auf. Beispielsweise handelt es sich bei der Vorrichtung 40 um einen Computer oder ein Steuergerät. Im Speicher 41 sind Instruktionen abgelegt, die die Vorrichtung 40 bei Ausführung durch den Prozessor 42 veranlassen, die Schritte gemäß einem der beschriebenen Verfahren auszuführen. Die im Speicher 41 abgelegten Instruktionen verkörpern somit ein durch den Prozessor 42 ausführbares Programm, welches das erfindungsgemäße Verfahren realisiert. Die Vorrichtung hat einen Eingang 43 zum Empfangen von Informationen. Vom Prozessor 42 generierte Daten werden über einen Ausgang 44 an ein Netzwerk 29 bereitgestellt. Darüber hinaus können sie im Speicher 41 abgelegt werden. Der Eingang 43 und der Ausgang 44 können zu einer bidirektionalen Schnittstelle zusammengefasst sein.

Der Prozessor 42 kann eine oder mehrere Prozessoreinheiten umfassen, beispielsweise Mikroprozessoren, digitale Signalprozessoren oder Kombinationen daraus.

Die Speicher 22, 27, 41 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch einen Sensor 21 zum Erfassen eines Messwertes, in dem eine erfindungsgemäße Lösung realisiert ist. Der Sensor 21 weist einen Speicher 22 auf, in dem zumindest ein dem Sensor 21 für eine Signierung des Messwertes zugewiesenes Zertifikat abgelegt ist. Zudem ist eine Signatureinheit 23 in den Sensor 21 integriert. Die Signatureinheit 23 signiert die erfassten Messwerte mit Hilfe des dem Sensor 21 zugewiesenen Zertifikates. Die signierten Messwerte werden durch eine Kommunikationseinheit 24 über eine Schnittstelle 30 ausgegeben. Die Signatureinheit 23 und die Kommunikationseinheit 24 können von einer Steuerungseinheit 25 gesteuert werden. Die Signatureinheit 23, die Kommunikationseinheit 24 sowie die Steuerungseinheit 25 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft.

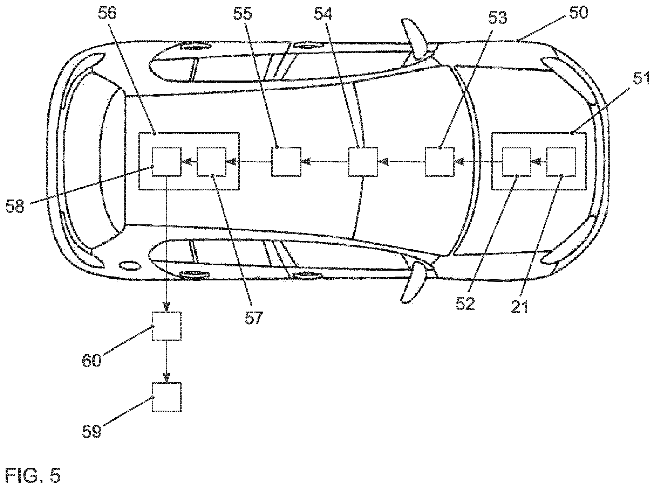

Nachfolgend soll eine bevorzugte Ausführungsform der Erfindung anhand von Fig. 5 beschrieben werden.

Fig. 5 zeigt schematisch ein Kraftfahrzeug 50, in dem das Verfahren aus Fig. 1 realisiert ist. Das Fahrzeug weist zumindest einen Sensor 21 auf, dem mindestens ein Zertifikat zugewiesen ist. Dieses Zertifikat wird benutzt, um Messungen des Sensors 21 vor dem Versand zu signieren. Die derart signierte Nachricht durchläuft diverse Knotenpunkte eines Bordnetzes im Kraftfahrzeug 50, bevor sie durch eine Kommunikationseinheit 56 an ein externes Backend übertragen wird. Im Beispiel in Fig. 5 werden die vom Sensor 21 signierten Daten von einem Kommunikationsprozessor 52 eines Steuergerätes 51 für den Sensor 21 über einen CAN A-Bus 53 (CAN: Controller Area Network) an ein Fahrzeuggateway 54 weitergeleitet. Von dort aus gelangen sie über einen CAN B-Bus 55 an die Kommunikationseinheit 56, wo sie von einem weiteren Kommunikationsprozessor 57 empfangen werden. Ein Mobilfunkprozessor 58 übernimmt schließlich die Übertragung der signierten Nachricht an den Empfänger 59, d.h. an das Backend. Im Backend wird schließlich die Signierung geprüft, d.h. die Echtheit der Daten anhand des Zertifikates überprüft. Im Falle eines für den Sensor 21 individuellen Zertifikates wird die signierte Nachricht vorzugsweise zunächst an eine sichere Zwischenstation 60 übermittelt, die die Echtheit der Nachricht anhand des Zertifikates überprüft. Die Nachricht wird dann mit einem der Zwischenstation 60 zugeordneten Zertifikat signiert und erst im Anschluss an den Empfänger 59 übermittelt.

Die Signierung ist unabhängig vom Bussystem, d.h. die Sensoren sind kompatibel mit den gängigen Bussystemen, wie beispielsweise CAN, CAN-FD (CAN mit flexibler Datenrate), Ethernet etc. Zudem ist die Signierung so implementiert, dass sie ausreichend performant für die Umsetzung in Software auf relativ schwachen Prozessoren ist. Anders ausgedrückt, die Signaturberechnung muss auf allen Sensoren performant zu implementieren sein, damit die verfügbare Rechenzeit im Sensor nicht übermäßig eingeschränkt wird. Bei einer Laufzeit der Signaturberechnung von 100µs werden stehen beispielsweise bereits 10% der verfügbaren Rechenzeit nicht mehr für die Auswertung der Messwerte zur Verfügung. Zudem sollte aus Kostengründen der Speicheraufwand minimal sein. Berücksichtigt werden muss zudem, dass ein Großteil der Eingangsdaten eine Länge ≤64 Bytes hat. Viele Standardverfahren, wie AES-CMAC (AES-CMAC: Advanced Encryption Standard - Cipher-based Message Authentication Code) [1] oder HMAC-SHA256 (HMAC-SHA: Hash-based Message Authentication Code - Secure Hash Algorithm) [2], sind unter diesen Prämissen aufgrund von Codegröße oder Laufzeit nicht nutzbar. Verwendet werden daher vorzugsweise MACs (MAC: Message Authentication Code), die auf ChaCha20/12 basieren [3], mit einer HAIFA Konstruktion (HAIFA: Hash Iterative Framework) [4]. Mit diesem Ansatz lassen sich Werte von <80 Bytes State im RAM sowie <100 Bytes State auf dem Stack realisieren. Die Laufzeit liegt je nach Prozessor zwischen 10µs und 100µs pro Aufruf. Bei Nutzdatenmengen bis zu 32 Bytes reicht ein Aufruf, je zusätzliche 48 Bytes ein Aufruf mehr. Im Vergleich dazu verlangt SHA-256 mindestens zwei Aufrufe auch für Datenmengen ≤32 Bytes.

### Bezugszeichenliste

- 10: Erfassen eines Messwertes
- 11: Signieren des erfassten Messwertes
- 12: Weitergabe des signierten Messwertes an Netzwerk
- 13: Übermittlung des signierten Messwertes an einen Server
- 14: Überprüfung der Echtheit des Messwertes
- 20: Vorrichtung
- 21: Sensor
- 22: Speicher
- 23: Signatureinheit
- 24: Kommunikationseinheit
- 25: Steuerungseinheit
- 26: Ausgang
- 27: Speicher
- 28: Benutzerschnittstelle
- 29: Netzwerk
- 30: Schnittstelle
- 40: Vorrichtung
- 41: Speicher
- 42: Prozessor
- 43: Eingang
- 44: Ausgang
- 50: Kraftfahrzeug
- 51: Steuergerät
- 52: Kommunikationsprozessor
- 53: CAN A-Bus
- 54: Fahrzeuggateway
- 55: CAN B-Bus
- 56: Kommunikationseinheit
- 57: Kommunikationsprozessor
- 58: Mobilfunkprozessor
- 59: Empfänger
- 60: Zwischenstation

### Referenzen

[1] NIST: Recommendation for Block Cipher Modes of Operation: The CMAC Mode for Authentication, Special Publication 800-38B, Computer Security Publications from the National Institute of Standards and Technology (NIST)
[2] NIST: The Keyed-Hash Message Authentication Code (HMAC). FIPS PUB 198-1
[3] D. J. Bernstein: ChaCha, a variant of Salsa20, http://cr.yp.to/chacha.html
[4] E. Biham und O. Dunkelman: A Framework for Iterative Hash Functions - HAIFA, Proceedings of Second NIST Cryptographic Hash Workshop, 2006

## Patentansprüche

1. Verfahren zur Verarbeitung von Messwerten eines Sensors (21) eines Kraftfahrzeugs (50), mit den Schritten:
- Erfassen (10) eines Messwertes durch den Sensor (21);
- Signieren (11) des erfassten Messwertes mit Hilfe eines dem Sensor (21) zugewiesenen Zertifikates, das geschützt in einem internen Speicher (22) des Sensors (21) abgelegt ist; und
- Weitergabe (12) des signierten Messwertes aus dem Sensor (21) an ein Netzwerk (29);
**gekennzeichnet durch**:
- Austauschen des im internen Speicher (22) abgelegten, dem Sensor (21) zugewiesenen Zertifikats mittels eines Softwareupdates.

2. Verfahren gemäß Anspruch 1, wobei der Speicher (22) ein manipulationssicherer Speicher ist.

3. Verfahren gemäß Anspruch 1 oder 2, wobei das Zertifikat ein individuelles Zertifikat ist.

4. Verfahren gemäß Anspruch 1 oder 2, wobei das Zertifikat ein aus einer dem Sensor (21) zugewiesenen Gruppe von Zertifikaten ausgewähltes Zertifikat ist.

5. Verfahren gemäß Anspruch 4, wobei das ausgewählte Zertifikat für die Laufzeit des Sensors (21) beibehalten wird.

6. Verfahren gemäß einem der vorherigen Ansprüche, mit den Schritten:
- Übermittlung (13) des signierten Messwertes an einen Empfänger (59); und
- Überprüfung (14) der Echtheit des Messwertes durch den Empfänger (59) anhand des Zertifikates.

7. Verfahren gemäß Anspruch 6, wobei der signierte Messwert vor der Übermittlung (13) an den Empfänger (59) in einer Zwischenstation (60) überprüft und mit einem der Zwischenstation (60) zugeordneten Zertifikat signiert wird.

8. Verfahren gemäß einem der vorherigen Ansprüche, wobei die Weitergabe (12) des signierten Messwertes aus dem Sensor (21) an ein Netzwerk (29) über ein Bussystem stattfindet.

9. Computerlesbares Speichermedium mit Instruktionen, die bei Ausführung durch einen Computer den Computer zur Ausführung der Schritte eines Verfahrens gemäß einem der Ansprüche 1 bis 8 zur Verarbeitung von Messwerten eines Sensors (21) eines Kraftfahrzeugs (50) veranlassen.

10. Sensor (21) zur Verwendung in einem Kraftfahrzeug (50) zum Erfassen (10) eines Messwertes, mit:
- einem internen Speicher (22), in dem zumindest ein dem Sensor (21) für eine Signierung (11) des Messwertes zugewiesenes Zertifikat geschützt abgelegt ist; und
- einer Signatureinheit (23) zum Signieren (11) eines erfassten Messwertes mit Hilfe des dem Sensor (21) zugewiesenen Zertifikates;
**dadurch gekennzeichnet, dass** der Sensor (21) eingerichtet ist, das im internen Speicher (22) abgelegte, dem Sensor (21) zugewiesene Zertifikat mittels eines Softwareupdates auszutauschen.

11. Sensor (21) gemäß Anspruch 10, wobei der Speicher (22) ein manipulationssicherer Speicher ist.

12. Sensor gemäß Anspruch 10 oder 11, wobei der Sensor zusätzlich eine Kommunikationseinheit (24) aufweist zum Weitergeben des signierten Messwertes aus dem Sensor (21) an ein Netzwerk (29).

13. Sensor gemäß Anspruch 12, wobei die Kommunikationseinheit (24) zur Weitergabe des signierten Messwertes aus dem Sensor an das Netzwerk kompatibel mit einem Bussystem ist, welches den Sensor mit dem Netzwerk verbindet.

14. Kraftfahrzeug (50), **dadurch gekennzeichnet, dass** es einen Sensor (21) gemäß einem der Ansprüche 10 bis 13 aufweist oder eingerichtet ist, ein Verfahren gemäß einem der Ansprüche 1 bis 8 zur Verarbeitung von Messwerten eines Sensors (21) auszuführen.

## Claims

1. Method for processing measurement values of a sensor (21) of a motor vehicle (50), having the steps of:
- measuring (10) a measurement value by way of the sensor (21) ;
- signing (11) the measured measurement value using a certificate which is assigned to the sensor (21) and is stored in an internal memory (22) of the sensor (21) in a protected manner; and
- transferring (12) the signed measurement value from the sensor (21) to a network (29);
**characterized by**:
- replacing the certificate, which is stored in the internal memory (22) and is assigned to the sensor (21), by means of a software update.

2. Method according to Claim 1, wherein the memory (22) is a tamper-proof memory.

3. Method according to Claim 1 or 2, wherein the certificate is an individual certificate.

4. Method according to Claim 1 or 2, wherein the certificate is a certificate selected from a group of certificates that is assigned to the sensor (21).

5. Method according to Claim 4, wherein the selected certificate is retained for the operating time of the sensor (21).

6. Method according to one of the preceding claims, having the steps of:
- transmitting (13) the signed measurement value to a receiver (59); and
- checking (14) the authenticity of the measurement value by way of the receiver (59) on the basis of the certificate.

7. Method according to Claim 6, wherein the signed measurement value is checked in an intermediate station (60) before being transmitted (13) to the receiver (59) and is signed with a certificate assigned to the intermediate station (60).

8. Method according to one of the preceding claims, wherein the signed measurement value is transferred (12) from the sensor (21) to a network (29) via a bus system.

9. Computer-readable memory medium having instructions which, when executed by a computer, cause the computer to perform the steps of a method according to one of Claims 1 to 8 for processing measurement values of a sensor (21) of a motor vehicle (50).

10. Sensor (21) for use in a motor vehicle (50) for measuring (10) a measurement value, having:
- an internal memory (22) in which at least one certificate assigned to the sensor (21) for signing (11) the measurement value is stored in a protected manner; and
- a signature unit (23) for signing (11) a measured measurement value using the certificate assigned to the sensor (21);
**characterized in that** the sensor (21) is configured to replace the certificate, which is stored in the internal memory (22) and is assigned to the sensor (21), by means of a software update.

11. Sensor (21) according to Claim 10, wherein the memory (22) is a tamper-proof memory.

12. Sensor according to Claim 10 or 11, wherein the sensor additionally has a communication unit (24) for transferring the signed measurement value from the sensor (21) to a network (29) .

13. Sensor according to Claim 12, wherein the communication unit (24) for transferring the signed measurement value from the sensor to the network is compatible with a bus system which connects the sensor to the network.

14. Motor vehicle (50), **characterized in that** it has a sensor (21) according to one of Claims 10 to 13 or is configured to perform a method according to one of Claims 1 to 8 for processing measurement values of a sensor (21) .

## Revendications

1. Procédé de traitement de valeurs mesurées d'un capteur (21) d'un véhicule à moteur (50), comprenant les étapes suivantes :
- acquisition (10) d'une valeur mesurée par le capteur (21) ;
- signature (11) de la valeur mesurée acquise à l'aide d'un certificat attribué au capteur (21), lequel est stocké de manière protégée dans une mémoire interne (22) du capteur (21) ; et
- transfert (12) de la valeur mesurée signée du capteur (21) à un réseau (29) ;
**caractérisé par** :
- échange du certificat attribué au capteur (21) et stocké dans la mémoire interne (22) au moyen d'une mise à jour de logiciel.

2. Procédé selon la revendication 1, la mémoire (22) étant une mémoire à l'épreuve des manipulations.

3. Procédé selon la revendication 1 ou 2, le certificat étant un certificat individuel.

4. Procédé selon la revendication 1 ou 2, le certificat étant un certificat sélectionné à partir d'un groupe de certificats attribué au capteur (21).

5. Procédé selon la revendication 4, le certificat sélectionné étant conservé pendant la durée de fonctionnement du capteur (21).

6. Procédé selon l'une des revendications précédentes, comprenant les étapes suivantes :
- communication (13) de la valeur mesurée signée à un récepteur (59) ; et
- contrôle (14) de l'authenticité de la valeur mesurée par le récepteur (59) à l'aide du certificat.

7. Procédé selon la revendication 6, la valeur mesurée signée étant contrôlée dans une station intermédiaire (60) avant la communication (13) au récepteur (59) et étant signée avec un certificat associé à la station intermédiaire (60).

8. Procédé selon l'une des revendications précédentes, le transfert (12) de la valeur mesurée signée du capteur (21) à un réseau (29) s'effectuant par le biais d'un système de bus.

9. Support d'enregistrement lisible par ordinateur comprenant des instructions qui, lors de l'exécution par un ordinateur, amènent l'ordinateur à exécuter les étapes d'un procédé selon l'une des revendications 1 à 8 en vue du traitement de valeurs mesurées d'un capteur (21) d'un véhicule à moteur (50).

10. Capteur (21) destiné à être utilisé dans un véhicule à moteur (50) pour acquérir (10) une valeur mesurée, comprenant :
- une mémoire interne (22), dans laquelle est stocké de manière protégée au moins un certificat attribué au capteur (21) pour une signature (11) de la valeur mesurée ; et
- une unité de signature (23) destinée à signer (11) une valeur mesurée acquise à l'aide du certificat attribué au capteur (21) ;
**caractérisé en ce que** le capteur (21) est conçu pour échanger le certificat attribué au capteur (21) et stocké dans la mémoire interne (22) au moyen d'une mise à jour de logiciel.

11. Capteur (21) selon la revendication 10, la mémoire (22) étant une mémoire à l'épreuve des manipulations.

12. Capteur selon la revendication 10 ou 11, le capteur possédant en plus une unité de communication (24) destinée au transfert de la valeur mesurée signée du capteur (21) à un réseau (29).

13. Capteur selon la revendication 12, l'unité de communication (24) destinée au transfert de la valeur mesurée signée du capteur au réseau étant compatible avec un système de bus qui connecte le capteur au réseau.

14. Véhicule à moteur (50), **caractérisé en ce qu'**il possède un capteur (21) selon l'une des revendications 10 à 13 ou est conçu pour mettre en œuvre un procédé selon l'une des revendications 1 à 8 pour le traitement de valeurs mesurées d'un capteur (21).
